# EUROPÄISCHE PATENTSCHRIFT

(11) **EP 2 546 023 B1**
(45) Veröffentlichungstag und Bekanntmachung des Hinweises auf die Patenterteilung: **15.01.2014**
(21) Anmeldenummer: 12173817.3
(22) Anmeldetag: 27.06.2012
(51) Int. Cl.: B23Q 1/76

(54) **Lünette mit Elektroantrieb**
Rest with electric drive
Lunette avec entraînement électrique

(30) Priorität: 13.07.2011 DE 102011051821
(43) Veröffentlichungstag der Anmeldung: 16.01.2013
(73) Patentinhaber: Röhm GmbH, 89567 Sontheim/Brenz (DE)
(72) Erfinder: Hangleiter, Eugen, 89568 Hermaringen (DE); Schenk, Peter, 89168 Niederstotzingen (DE)
(74) Vertreter: Hentrich, Swen

(56) Entgegenhaltungen:
- EP-A1- 2 353 777
- DE-A1- 3 544 961
- DE-U1- 8 510 239
- US-A- 5 058 468

## Beschreibung

Die Erfindung betrifft eine Lünette zum zentrischen Spannen von Werkstücken, mit drei in einer Ebene angeordneten, Laufrollen aufweisenden Haltegliedern, von denen die zwei äußeren Halteglieder Spannarmen zugeordnet sind, die um im Lünettenkörper angeordnete Gelenkbolzen verschwenkbar sind, und das mittlere Halteglied geradlinig relativ zum Werkstück verstellbar ist.

Eine Lünette der eingangs genannten Art ist bereits aus der DE 35 44 961 A1 bekannt, wobei diese hydraulisch betätigt wird. Hierbei ist stets darauf zu achten, dass ausreichend Hydraulikflüssigkeit in den Kolbenkammern vorhanden ist, um die Spannkraft der Lünette zum zentrischen Spannen von Werkstücken aufrechtzuerhalten. Auftretende Leckagen stellen dabei ein Problem hydraulisch betätigter Lünetten mit dem daraus folgenden Effekt eines Spannkraftverlustes dar.

Eine mit einem Elektromotor betriebene Lünette ist aus der nichtvorveröffentlichten EP 2 353 777 A1 bekannt. Die in dieser Druckschrift beschriebene Lünette ermöglicht die Zustellung der Halteglieder in zwei unterschiedlichen Zustellgeschwindigkeiten mit ein und demselben Elektromotor, nämlich in einer Eilbewegung und in einer Spannbewegung. Die Halteglieder werden in der Eilbewegung auf das Werkstück mit einer hohen Geschwindigkeit zubewegt. Wenn die Halteglieder am Werkstück zur Anlage kommen, wird bei Übersteigen eines vordefinierten Drehmoments eine Rutschkupplung ausgelöst. Danach erfolgt der Betrieb der Lünette in der Spannbewegung zum Spannen des Werkstücks.

Es ist daher die Aufgabe der vorliegenden Erfindung, eine Lünette der eingangs genannten Art bereitzustellen, bei der einerseits die Spannsicherheit gewährleistet ist und andererseits die Spannkraft überwacht werden kann.

Diese Aufgabe wird mit einer Lünette gemäß dem Merkmalsbestand des Patentanspruchs 1 gelöst.

Mit dem Einsatz eines Elektromotors ist der Vorteil verbunden, dass die Lünette kompakter gebildet werden kann, da sie für die Verstellung dieses Haltegliedes ohne eine Druckmittelkammer und einem darin geführten Druckkolben auskommt. Weiterhin kann die erfindungsgemäße Lünette auch ihren Einsatz bei automatisierten Bearbeitungszentren finden, da diese ohnehin mit elektrischer Spannung versorgt werden müssen. Die Erfindung bietet dem Anwender somit darüber hinaus eine fortschreitende Automation seiner Fertigung. Der Elektromotor wird dabei mit der üblichen Niederspannung betrieben.

Von Vorteil ist es dabei, dass mindestens eines der beiden äußeren Halteglieder mittels des Elektromotors verstellbar ist.

Erfindungsgemäß ist das mittlere Halteglied mittels einer Stange verstellbar und der Antrieb der Stange mittels des Elektromotors realisiert. Die Stange ist dabei das angetriebene Bauteil in der Kraftübertragungskette vom Elektromotor zu den äußeren Haltegliedern. Damit wird die Verstellung des mittleren Haltegliedes der Lünette axial rückwärtig durch den Elektromotors ausgeführt.

Es hat sich als günstig erwiesen, wenn die Stange mittels eines Linearantriebs verstellbar ist. Hierdurch kann bei der Lünette auf einfache Weise ein standardisierter und dadurch kostengünstiger Linearmotor eingesetzt werden. Auch können so bereits bestehende Lünetten mit einem Elektroantrieb nachgerüstet werden.

Erfindungsgemäß ist die Stange als eine Spindel gebildet und durch ein mittels des Elektromotors antreibbaren Spindelglieds verstellbar. Damit muss die Drehbewegung des Elektromotors nicht zunächst in eine Linearbewegung gewandelt werden um die Stange zu verstellen, da diese nun selbstständig axial durch das zwischen der Spindel und dem Spindelglied ausgebildete Spindelgewinde verstellt wird.

Weiterhin ist von Vorteil, wenn zwischen dem Spindelglied und der Spindel ein Getriebe, vorzugsweise ein Planetengetriebe vorgesehen ist. Dieses Getriebe bestimmt die Übersetzung und die Übertragung der Drehzahl. Außerdem gewährleistet es die Übertragung des nötigen Drehmomentes.

Günstigerweise ist das Spindelglied mehrteilig, vorzugsweise aus einer Spindelmutter, einer Kupplung und einem Antriebsrad gebildet. Diese Mehrteiligkeit erleichtert die Montage der Lünette.

Ist das Antriebsrad außerdem als Zahnriemenrad gebildet und über einen Riemenantrieb durch den Elektromotor antreibbar, so bietet dies den Vorteil, dass die Baulänge und / oder Bauhöhe der Lünette reduziert werden kann. Dabei ist es nicht ausgeschlossen, dass auch sonstige die Drehzahl des Elektromotors übertragende Verbindungen, beispielsweise eine Zahnradverbindung oder eine Kettenverbindung, zwischen dem Elektromotor und dem Antriebsrad ausgebildet sind.

Eine weitere Ausführungsform ist dadurch gekennzeichnet, dass eine den Elektromotor steuernde Steuereinheit vorgesehen ist. Dies erleichtert es dem Benutzer der Lünette den Elektromotor sehr fein und präzise einzustellen. Diese Einstellung der Drehzahl des Elektromotors kann auch automatisiert durch die Steuereinheit alleine geschehen.

Bei der erfindungsgemäßen Lünette ist auf der axial rückwärtigen Seite zwischen dem Spindelglied und dem Lünettenkörper ein Federelement angeordnet ist, welches vorzugsweise als ein mehrere Tellerfedern aufweisendes Federpaket gebildet ist. Dieses Tellerfederpaket dient dabei als Spannkraftspeicher und als Spannkraftsicherung. Beim Spannvorgang werden die Spindel und damit das Halteglied durch den Elektromotor in Richtung des Werkstückes bewegt. Sobald das Halteglied am Werkstück anliegt, kann die Spindel nicht mehr axial relativ zum Werkstück bewegt werden. Infolgedessen wird das Spindelglied in seiner axialen Lage innerhalb des Lünettenkörpers gegen die Kraft des Federelements verstellt. Die Energie des Elektromotors wird also dazu genutzt, um das Federelement zu komprimieren bzw. zu expandieren, womit durch das Federelement eine permanente Rückstellkraft auf das Spindelglied, auf die Spindel und damit auf das das Werkstück haltende Halteglied wirkt.

Außerdem ist von Vorteil, wenn ein Kraftsensor vorgesehen ist, welcher vorzugsweise zwischen dem Federelement und dem Spindelglied angeordnet ist. Damit können, nach einer Auswertung der Daten der Federkennlinie, direkte Rückschlüsse auf die wirkende Spannkraft gezogen werden. Es können verschiedene Kraftsensoren eingesetzt werden, wobei der Einsatz einer kraftmessenden Unterlegscheibe als besonders bevorzugt erscheint.

Bei der Erfindung ist zwischen dem Spindelglied und dem Federelement eine einen Distanzindikator aufweisende Distanzscheibe vorgesehen. Hierdurch kann die Längenänderung des Federelements detektiert werden, die durch dessen Zusammenpressen bzw. Auseinanderziehen auftritt. Ferner ist ein Abstandssensor vorgesehen ist, der den sich ändernden Abstand zum Distanzindikator messen kann.

Im Rahmen der Erfindung hat es sich als besonders bevorzugt gezeigt, dass die Steuereinheit eine Kommunikationsverbindung mit dem Kraftsensor und / oder dem Abstandssensor aufweist. Der Elektromotor kann nun, basierend auf der Auswertung der Daten der Federkennlinie, kraftabhängig durch die Steuereinheit gesteuert werden. Dabei hat sich gezeigt, dass die Ausführung der erfindungsgemäßen Lünette mit einer kraftabhängigen Steuerung des Elektromotors, basierend auf der Auswertung der Daten des Abstandssensors, sehr kostengünstig und damit besonders bevorzugt ist. Um die Baulänge der Lünette gering zu halten, hat es sich als vorteilhaft erwiesen, dass der Elektromotor achsparallel zur Lünettenlängsachse orientiert ist.

Letztlich ist es ebenfalls sinnvoll, wenn die zwei äußeren Halteglieder durch die Stange verstellbar sind. Dies kann auf einfache Weise mittels einer an der Stange vorgesehenen Steuerkurve realisiert werden, die mit an den Spannarmen vorgesehenen Steuergliedern zusammenwirkt.

Im folgenden wird die Erfindung an einem in der Zeichnung dargestellten Ausführungsbeispiel näher erläutert; es zeigen:
- Fig. 1: eine perspektivische Ansicht der erfindungsgemäßen Lünette
- Fig. 2: die Lünette aus Figur 1 ohne Antriebsabdeckung, und
- Fig. 3: einen Längsschnitt durch die Lünette aus Figur 1.

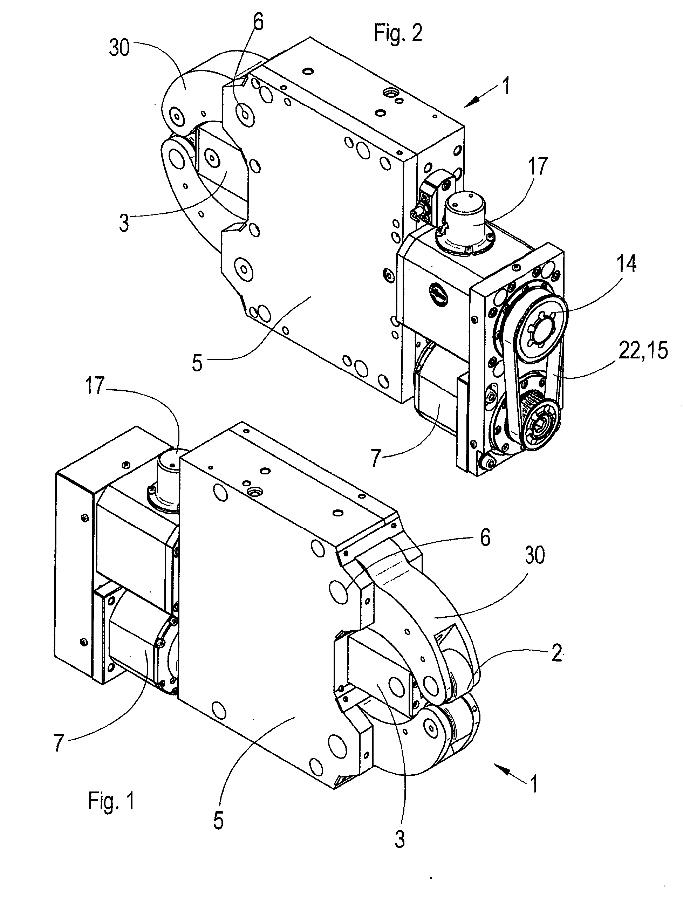

In den Figuren 1 bis 3 ist eine Lünette 1 zum zentrischen Spannen von Werkstücken, mit drei in einer Ebene angeordneten, Laufrollen 2 aufweisenden Haltegliedern 3, 30, von denen die zwei äußeren Halteglieder 30 Spannarmen 4 zugeordnet sind, die um im Lünettenkörper 5 angeordnete Gelenkbolzen 6 verschwenkbar sind, und das mittlere Halteglied 3 geradlinig relativ zum Werkstück verstellbar ist. Mindestens eines der Halteglieder 3, 30 ist mittels eines Elektromotors 7 verstellbar.

Im gezeigten Ausführungsbeispiel ist das mittlere Halteglied 3 mittels einer Stange 8 verstellbar, die als Spindel 9 gebildet ist. Die Stange 8 ist durch ein mittels des Elektromotors 7 antreibbaren Spindelglieds 10, welches mehrteilig aus einer Spindelmutter 12, einer Kupplung 13 und einem Antriebsrad 14 gebildet ist, verstellbar.

Zwischen der Spindelmutter 12 und der Spindel 9 ist ein Getriebe 11, hier ein Planetengetriebe mit Rollen 21 , vorgesehen.

Das Antriebsrad 14 ist als Zahnriemenrad gebildet und über einen Riemenantrieb 22 durch den Elektromotor 7 antreibbar, welcher achsparallel zur Lünettenlängsachse orientiert ist.

Weiterhin ist auf der axial rückwärtigen Seite zwischen der Spindelmutter 12 und dem Lünettenkörper 5 ein Federelement 16 angeordnet, welches als ein mehrere Tellerfedern 23 aufweisendes Federpaket gebildet ist.

Eine den Elektromotor 7 steuernde Steuereinheit 17 ist vorgesehen, die eine Kommunikationsverbindung mit einem Abstandssensor 20 aufweist. Dieser

Abstandssensor 20 misst den Abstand von einem an einer Distanzscheibe 19 vorgesehene Distanzindikator 18. Der Elektromotor 7 ist achsparallel zur Lünettenlängsache und die Distanzscheibe 19 ist zwischen der Spindelmutter 12 und dem Federelement 16 angeordnet.

Im gezeigten Ausführungsbeispiel sind die äußeren zwei Halteglieder 30 ebenfalls durch die Stange 8 verstellbar. Hierzu weist die Stange 8 eine Steuerkurve 24 und die Spannarme 4 mit der Steuerkurve 24 zusammenwirkende Steuerglieder 25 auf.

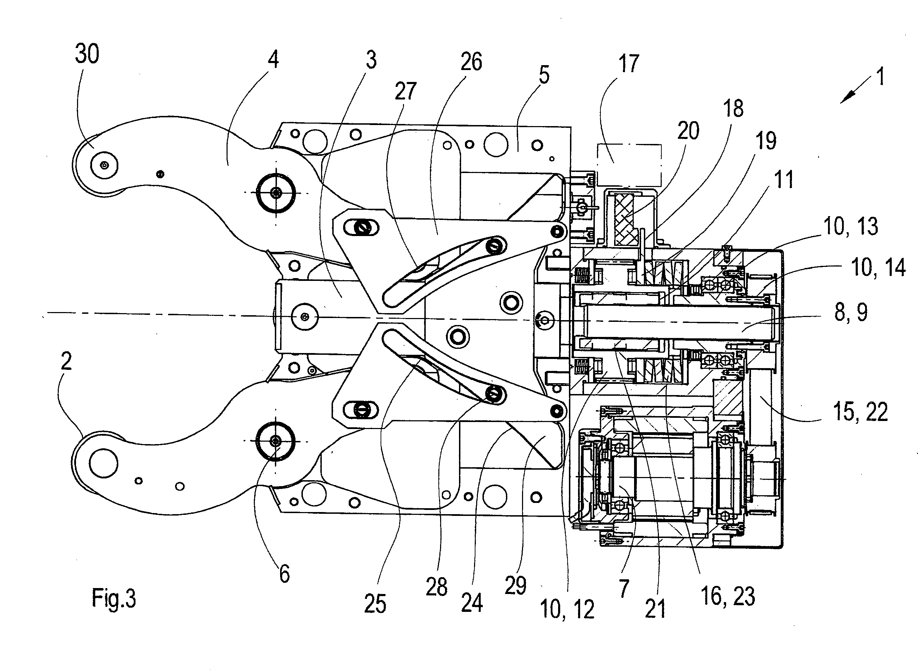

Aus Figur 3 ist ersichtlich, dass bei geradliniger Verstellung der Stange 8 die Steuerkurve 24 ebenfalls geradlinig in die Richtung des Werkstücks verstellt wird. Dadurch werden die Spannarme 4 rückwärtig nach außen gedrückt und um die Gelenkbolzen 6 verschwenkt, womit das Werkstück durch die äußeren Halteglieder 30 gespannt wird.

Um die Spannung wieder zu lösen sind Rückholhebel 26 vorgesehen, die Führungen 27 aufweisen, in denen Rückholglieder 28 geführt sind. Dabei kann die Steuerkurve 24 durch ein mit der Stange 8 verbundenes Steuerelement 29 gebildet sein, an dem die Rückholglieder 28 befestigt sind.

### Bezugszeichenliste

- 1: Lünette
- 2: Laufrollen
- 3: Mittleres Halteglied
- 4: Spannarm
- 5: Lünettenkörper
- 6: Gelenkbolzen
- 7: Elektromotor
- 8: Stange
- 9: Spindel
- 10: Spindelglied
- 11: Getriebe
- 12: Spindelmutter
- 13: Kupplung
- 14: Antriebsrad
- 15: Riemenantrieb
- 16: Federelement
- 17: Steuereinheit
- 18: Distanzindikator
- 19: Distanzscheibe
- 20: Abstandssensor
- 21: Rollen
- 22: Riemen
- 23: Tellerfeder
- 24: Steuerkurve
- 25: Steuerglied
- 26: Rückholhebel
- 27: Führungen
- 28: Rückholglied
- 29: Steuerelement
- 30: Äußeres Halteglied

## Patentansprüche

1. Lünette (1) zum zentrischen Spannen von Werkstücken, mit drei in einer Ebene angeordneten, Laufrollen (2) aufweisenden Haltegliedern (3, 30), von denen die zwei äußeren Halteglieder (30) Spannarmen (4) zugeordnet sind, die um im Lünettenkörper (5) angeordnete Gelenkbolzen (6) verschwenkbar sind, und das mittlere Halteglied (3) geradlinig relativ zum Werkstück verstellbar ist, wobei das mittlere Halteglied (3) mittels einer als eine Spindel (9) gebildete Stange verstellbar ist, deren Antrieb mittels eines Elektromotors (7) realisiert ist und die durch ein mittels des Elektromotors (7) antreibbaren Spindelglieds (10) verstellbar ist, und wobei auf der axial rückwärtigen Seite zwischen dem Spindelglied (10) und dem Lünettenkörper (5) ein Federelement (16) angeordnet ist, **dadurch gekennzeichnet, dass** zwischen dem Spindelglied(10) und dem Federelement (16) eine einen Distanzindikator (18) aufweisende Distanzscheibe (19) vorgesehen ist, und dass ein Abstandssensor (20) vorgesehen ist zur Messung des sich ändernden Abstands zum Distanzindikator (18).

2. Lünette (1) nach Anspruch 1, **dadurch gekennzeichnet, dass** mindestens eines der beiden äußeren Halteglieder (30) mittels des Elektromotors (7) verstellbar ist.

3. Lünette (1) nach Anspruch 1 oder 2, **dadurch gekennzeichnet, dass** die Stange (8) mittels eines Linearantriebs verstellbar ist.

4. Lünette (1) nach einem der Ansprüche 1 bis 3, **dadurch gekennzeichnet, dass** zwischen dem Spindelglied (10) und der Spindel (9) ein Getriebe (11), vorzugsweise ein Planetengetriebe vorgesehen ist.

5. Lünette (1) nach einem der Ansprüche 1 bis 4, **dadurch gekennzeichnet, dass** das Spindelglied (10) mehrteilig, vorzugsweise aus einer Spindelmutter (12), einer Kupplung (13) und einem Antriebsrad (14) gebildet ist.

6. Lünette (1) nach Anspruch 5, **dadurch gekennzeichnet, dass** das Antriebsrad (14) als Zahnriemenrad gebildet und über einen Riemenantrieb(15) durch den Elektromotor (7) antreibbar ist.

7. Lünette (1) nach einem der Ansprüche 1 bis 6, **dadurch gekennzeichnet, dass** eine den Elektromotor (7) steuernde Steuereinheit (17) vorgesehen ist.

8. Lünette (1) nach einem der Ansprüche 1 bis 7, **dadurch gekennzeichnet, dass** das Federelement (16) als ein mehrere Tellerfedern (23) aufweisendes Federpaket gebildet ist.

9. Lünette (1) nach einem der Ansprüche 1 bis 8, **dadurch gekennzeichnet, dass** ein Kraftsensor vorgesehen ist, welcher vorzugsweise zwischen dem Federelement (16) und dem Spindelglied (10) angeordnet ist.

10. Lünette (1) nach einem der Ansprüche 7 bis 9, **dadurch gekennzeichnet, dass** die Steuereinheit (12) eine Kommunikationsverbindung mit dem Kraftsensor und / oder dem Abstandssensor (20) aufweist.

11. Lünette (1) nach einem der Ansprüche 1 bis 10, **dadurch gekennzeichnet, dass** der Elektromotor (7) achsparallel zur Lünettenlängsachse orientiert ist.

12. Lünette(1) nach einem der Ansprüche 2 bis 11, **dadurch**
**gekennzeichnet, dass** die beiden äußeren Halteglieder (30) durch die Stange (8) verstellbar sind.

## Claims

1. A steady rest (1) for centrally clamping workpieces comprising three holding members (3, 30) which are arranged in one plane and which have rollers (2) and of which the two outer holding members (30) are associated with clamping arms (4) pivotable about hinge pins (6) arranged in the steady rest body (5) and the central holding member (3) is displaceable in a straight line relative to the workpiece, wherein the central holding member (3) is displaceable by means of a rod which is formed as a spindle (9) and the drive of which is effected by means of an electric motor (7) and which is displaceable by a spindle member (10) drivable by means of the electric motor (7), and wherein a spring element (16) is arranged on the axially rearward side between the spindle member (10) and the steady rest body (5), **characterised in that** a distance disc (19) having a distance indicator (18) is provided between the spindle member (10) and the spring element (16) and that there is provided a spacing sensor (20) for measuring the changing spacing relative to the distance indicator (18).

2. A steady rest (1) according to claim 1 **characterised in that** at least one of the two outer holding members (30) is displaceable by means of the electric motor (7).

3. A steady rest (1) according to claim 1 or claim 2 **characterised in that** the rod (8) is displaceable by means of a linear drive.

4. A steady rest (1) according to one of claims 1 to 3 **characterised in that** a transmission (11) preferably an epicyclic transmission, is provided between the spindle member (10) and the spindle (9).

5. A steady rest (1) according to one of claims 1 to 4 **characterised in that** the spindle member (10) is formed in a multi-part configuration, preferably from a spindle nut (12), a coupling (13) and a drive wheel (14).

6. A steady rest (1) according to claim 5 **characterised in that** the drive wheel (14) is formed as a toothed belt wheel and is drivable by the electric motor (7) by way of a belt drive (15).

7. A steady rest (1) according to one of claims 1 to 6 **characterised in that** there is provided a control unit (17) controlling the electric motor (7).

8. A steady rest (1) according to one of claims 1 to 7 **characterised in that** the spring element (16) is in the form of a spring pack having a plurality of plate springs (23).

9. A steady rest (1) according to one of claims 1 to 8 **characterised in that** there is provided a force sensor preferably arranged between the spring element (16) and the spindle member (10).

10. A steady rest (1) according to one of claims 7 to 9 **characterised in that** the control unit (12) has a communication connection with the force sensor and/or the spacing sensor (20).

11. A steady rest (1) according to one of claims 1 to 10 **characterised in that** the electric motor (7) is oriented in axis-parallel relationship with the longitudinal axis of the steady rest.

12. A steady rest (1) according to one of claims 2 to 11 **characterised in that** the two outer holding member (30) are displaceable by the rod (8).

## Revendications

1. Lunette (1) destinée au serrage centré de pièces à usiner, comprenant trois éléments de maintien (3, 30), disposés dans un plan et présentant des galets (2), parmi lesquels les deux éléments de maintien extérieurs (30) sont associés à des bras de serrage (4), qui peuvent pivoter autour d'axes d'articulation (6) disposés dans le corps de lunette (5), et l'élément de maintien intermédiaire (3) peut être déplacé de façon rectiligne par rapport à la pièce, l'élément de maintien intermédiaire (3) pouvant être déplacé au moyen d'une tige conformée en broche (9) dont l'entraînement est réalisé au moyen d'un moteur électrique (7) et qui peut être déplacée par un organe de broche (10) pouvant être entraîné au moyen du moteur électrique (7), et un élément faisant ressort (16) étant disposé sur le côté situé axialement à l'arrière, entre l'organe de broche (10) et le corps de lunette (5), **caractérisée en ce qu'**un disque d'écartement (19), présentant un indicateur d'écartement (19), est prévu entre l'organe de broche (10) et l'élément faisant ressort (16), et **en ce qu'**il est prévu un capteur de distance (20), destiné à mesurer la distance qui varie par rapport à l'indicateur d'écartement (18).

2. Lunette (1) selon la revendication 1, **caractérisée en ce qu'**au moins un des deux éléments de maintien extérieurs (30) peut être déplacé au moyen du moteur électrique (7).

3. Lunette (1) selon la revendication 1 ou 2, **caractérisée en ce que** la tige (8) peut être déplacée au moyen d'un dispositif d'entraînement linéaire.

4. Lunette (1) selon une des revendications 1 à 3, **caractérisée en ce qu'**entre l'organe de broche (10) et la broche (9), il est prévu un mécanisme de transmission (11), de préférence un train planétaire.

5. Lunette (1) selon une des revendications 1 à 4, **caractérisée en ce que** l'organe de broche (10) est réalisé en plusieurs parties, de préférence à partir d'un écrou de broche (12), d'un moyen d'accouplement (13) et d'une roue d'entraînement (14).

6. Lunette (1) selon la revendication 5, **caractérisée en ce que** la roue d'entraînement (14) est réalisée sous forme de roue à courroie dentée et peut être entraînée par le moteur électrique (7), par l'intermédiaire d'une transmission par courroie (15).

7. Lunette (1) selon une des revendications 1 à 6, **caractérisée en ce qu'**il est prévu une unité de commande (17) commandant le moteur électrique (7).

8. Lunette (1) selon une des revendications 1 à 7, **caractérisée en ce que** l'élément faisant ressort (16) est réalisé sous la forme d'un ensemble de ressorts présentant plusieurs rondelles-ressorts (23).

9. Lunette (1) selon une des revendications 1 à 8, **caractérisée en ce qu'**il est prévu un capteur de force qui est disposé de préférence entre l'élément faisant ressort (16) et l'organe de broche (10).

10. Lunette (1) selon une des revendications 7 à 9, **caractérisée en ce que** l'unité de commande (12) présente une liaison de communication avec le capteur de force et/ou le capteur de distance (20).

11. Lunette (1) selon une des revendications 1 à 10, **caractérisée en ce que** le moteur électrique (7) est orienté parallèlement à l'axe longitudinal de la lunette.

12. Lunette (1) selon une des revendications 2 à 11, **caractérisée en ce que** les deux éléments de maintien extérieurs (30) peuvent être déplacés par la tige (8).
